# FASCICULE DE BREVET EUROPEEN

(11) **EP 0 300 109 B1**
(45) Date de publication et mention de la délivrance du brevet: **25.08.1993**
(21) Numéro de dépôt: 87402783.2
(22) Date de dépôt: 08.12.1987
(51) Int. Cl.: G11B 23/03, B65D 85/57

(54) **Ensemble pochette-boîtier inviolable pour prêt ou vente**
Unverletzbare Tasche-Gehäuse Kombination für Verleih oder Verkauf
Inviolable jacket-case assembly for lending or selling

(30) Priorité: 24.06.1987 FR 8708886; 30.09.1987 FR 8713503
(43) Date de publication de la demande: 25.01.1989
(73) Titulaire: Matuz, Louis, F-91080 Courcouronnes (FR)
(72) Inventeur: Matuz, Louis, F-91080 Courcouronnes (FR)

(56) Documents cités:
- DE-U- 8 515 950
- US-A- 4 538 730

## Description

La présente invention concerne un boîtier inviolable contenant la partie de la pochette renfermant un ou plusieurs disques compacts, par exemple la partie de la pochette contenant le livret étant accessible de l'extérieur du boîtier.

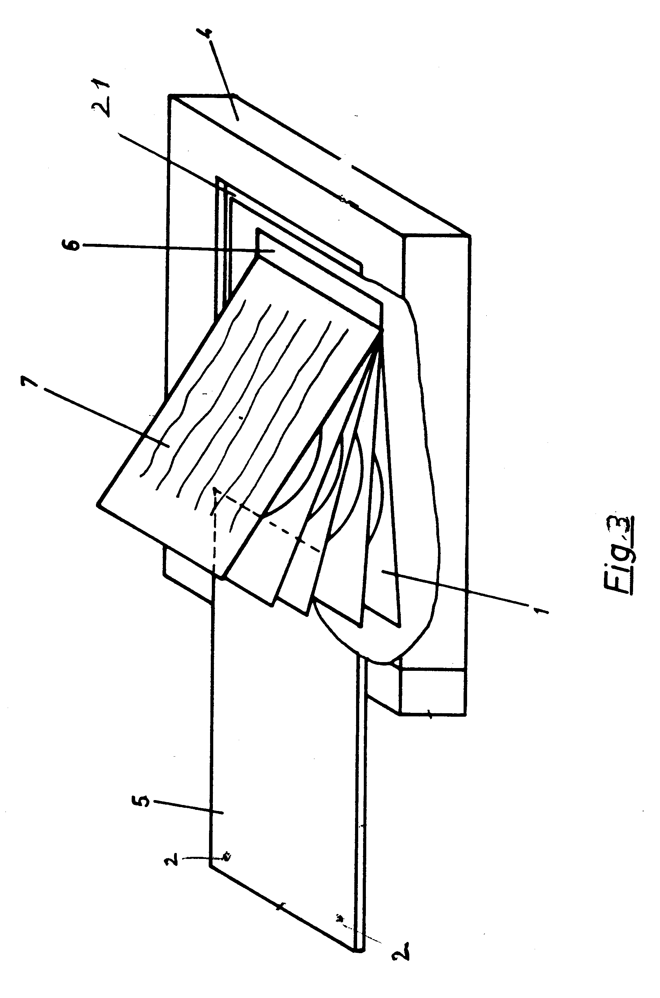

Suivant la figure 3 l'invention est caractérisée par un boîtier (4) fermé par un couvercle coulissant (5) verrouillable. Ce boîtier contient le ou les disques compacts contenu(s) dans des étuis (1), qui sont soudées à un volet extérieur contenant le livret (7).

La présente invention est utilisée dans l'industrie des prêts de disques.

La présente invention concerne un ensemble comprenant un boîtier doté d'un couvercle inviolable contenant une pochette renfermant les disques compacts. Cette pochette est soudée à un double volet souple qui contient le livret caractérisant l'oeuvre musicale ou sonore contenue sur un disque compact.

Outre le livret, la pochette est complétée par des étuis souples destinés à recevoir la "fiche de santé" caractérisant l'identité et le contenu du disque compact et de prêt.

Le client qui désire emprunter un disque compact s'informe sur le livret du contenu du disque et, s'il le désire, acquiert ce dernier auprès du loueur. Pour accéder au disque-compact, le loueur déverrouille le couvercle du boîtier pour retirer l'ensemble disque et livret.

On connait de nombreux dispositifs ou organisations de prêt concernant plus particulièrement les ouvrages écrits. Ces derniers, rangés dans une bibliothèque, sont consultés par la clientèle qui désire emprunter. Si cette opération est décidée, l'emprunteur échange l'ouvrage contre la fiche identifiant l'oeuvre, moyennant un engagement de location. Cette disposition est facilement adaptable pour le livre dans la mesure où celui-ci peut être préalablement consulté de visu. Elle ne peut s'appliquer aux disques classiques que lorsque ceux-ci sont identifiés dans leur intégralité, mais devient difficilement adaptable aux disques compacts dont le vaste contenu est toujours complexe, décomposé en chapitres homogènes ou divers. En effet, ces disques, qui regroupent généralement l'ensemble d'une oeuvre intéressant un ou plusieurs auteurs sont destinés à fournir une durée continue d'écoute de plusieurs heures.
De plus, ces disques compacts à laser, sont fragiles et de grande valeur. Sa mise à la disposition du grand public ne peut s'envisager sans risque de détérioration rapide des disques. Pour limiter ces manipulations, les disques compacts sont associés à des livrets décrivant l'oeuvre ou les oeuvres enregistrées.
Enfin, le prêt suppose des risques de vol ou d'emprunt sauvage ; pour éviter ces risques, il est nécessaire d'envisager une disposition interdisant l'emprunt du disque sans contrôle du service de louage ou de surveillance.

On connaît des dispositifs qui comportent un boîtier contenant le disque compact contenu dans un étui anti-poussière. La fiche d'identification et/ou de prêt est collé à l'extérieur du boîtier et solidaire de ce dernier. Le boîtier s'ouvre par un couvercle pivotant autour d'une charnière ; lorsque le client désire acquérir le contenu du boîtier il s'adresse à la caisse qui enregistre le prêt ou la vente et ouvre le boîtier au moyen d'une clé passe partout. Cette clé passe-partout peut être détenue par les clients désireux de se procurer frauduleusement le disque compact. Un boîtier similaire à l'usage de disquettes magnétiques flexibles est décrit dans US-A-4.538.730.

la présente invention a pour but de proposer un ensemble pochette-boîter inviolable pour prêt de disques compacts, caractérisé en ce que cet ensemble comporte une pochette plastique souple à volets composés d'étuis (1) réunis par un dosseret (6), ces étuis contenant un ou plusieurs disques compacts, un livret d'identification (7) et une fiche de prêt ; un boîtier (4) muni d'un couvercle coulissant verrouillable (5) qui laisse subsister, quand il est fermé, un espace suffisant (21) pour assurer l'émergence à l'extérieur du boîtier des étuis contenant le livret d'identification (7) et de retenir à l'intérieur du boîtier les étuis contenant les disques compacts et la fiche de prêt sans que les disques compacts ne puissent être extraits du boîtier verrouillé.

La présente invention présente de nombreux avantages, et notamment :
- un très faible coût de fabrication,
- une mise en oeuvre simple,
- une garantie contre le vol et toute forme de dégradation,
- une identification rapide du contenu du disque.

La présente invention ainsi définie sera mieux comprise grâce aux dessins annexés qui ne sont présentés qu'à titre indicatif et non limitatif, notamment en ce qui concerne la nature des matériaux et la forme choisie.

Les figures 1 et 2 représentent la pochette souple contenant le livret et les étuis conservant les disques compacts protégés.

La figure 3 représente le boîtier devant contenir la pochette souple.

Les figures 4 et 5 représentent en coupe le couvercle et le coffret portant la lame métallique en position de verrouillage.

La figure 6 représente en coupe le couvercle et le coffret en position de déverrouillage.

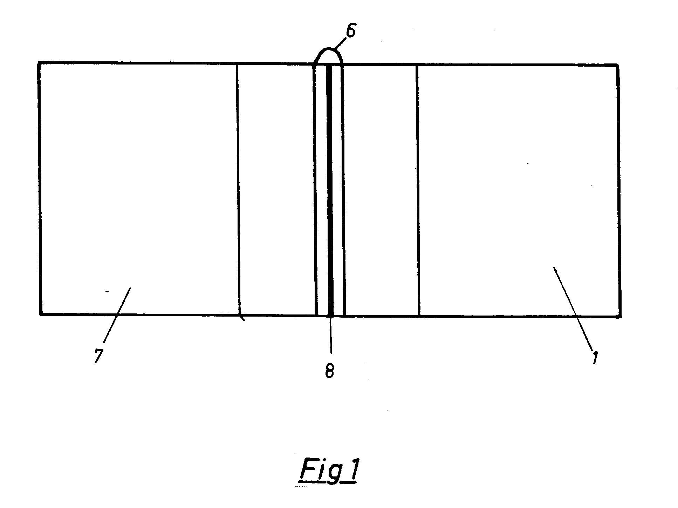

Suivant une caractéristique importante de l'invention, on a représenté à la figure 1 la pochette ouverte à son premier volet. Cette pochette comporte une partie extérieure qui ne rentre pas dans le boîtier, et une partie interne contenant les étuis avec les disques et logée dans le boîtier. La pochette externe, dans notre exemple, a comme dimensions 180mm de long sur 160mm de large. Elle est réalisée au moyen de film de polychlorure de vinyl de 150 microns d'épaisseur, translucide, soudée par une soudure à haute fréquence (8). Le dosseret plastique (6) réunit la pochette portant le livret (7), les étuis à disque compact (1), la fiche d'identification et la fiche de santé également contenues dans le livret (7) à plusieurs pochettes.

Le dosseret plastique souple d'une largeur d'environ 20mm est constitué d'une soudure continue (8) réunissant les étuis de la pochette.
Le livret (7) contient les documents décrivant ou caractérisant l'oeuvre enregistrée sur le disque compact proposé. Il est collé à un des étuis (1) en chlorure de polyvinyl souple ouvert au niveau (6).

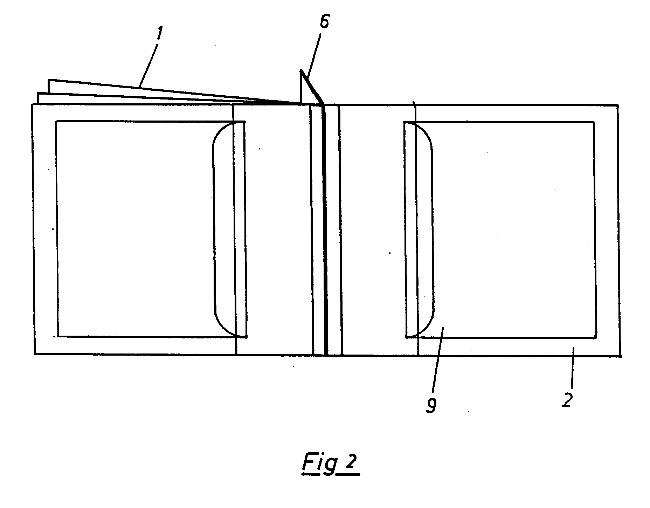

Suivant une autre caractéristique de l'invention, on trouve à la figure 2 les étuis individuels (1) s'ouvrant à la façon d'une pochette. Ces étuis sont en nombre suffisant pour contenir le livret décrivant l'oeuvre. Les disques compacts sont logés dans leur sachet (9) et mis à la disposition de l'emprunteur au moment où ce dernier a établi un engagement de location, après avoir consulté le livret descriptif (7).
Les disques et sachets sont logés dans leurs étuis (1) et placés à l'intérieur d'un boîtier verrouillable, tandis que l'étui contenant le livret (7) émerge de ce boîtier et peut être consultée librement.

Suivant une caractéristique importante de l'invention, on a représenté à la figure 3 le boîtier devant contenir la pochette souple et ses disques.
Cette figure 3 représente l'ensemble complet pochette-boîtier, avec une vue partiellement éclatée.
Le boîtier (4) est partiellement fermé par le couvercle coulissant (5). La partie de la pochette comprenant les sachets (9) contenant les disques compacts est glissée à l'intérieur du boîtier, tandis que l'étui contenant le livret (7) reste à l'extérieur de celui-ci.
Le livret (7) et les étuis (1) sont réunis au dosseret (6) qui se dissimule dans le boîtier lorsque le couvercle (5), en glissant, ferme le boîtier (4).
Le verrouillage du couvercle au niveau (2) permet à ce dernier de maintenir un espace suffisant au niveau (21) pour laisser s'échapper le dosseret souple (6) sans permettre l'extraction des disques compacts.

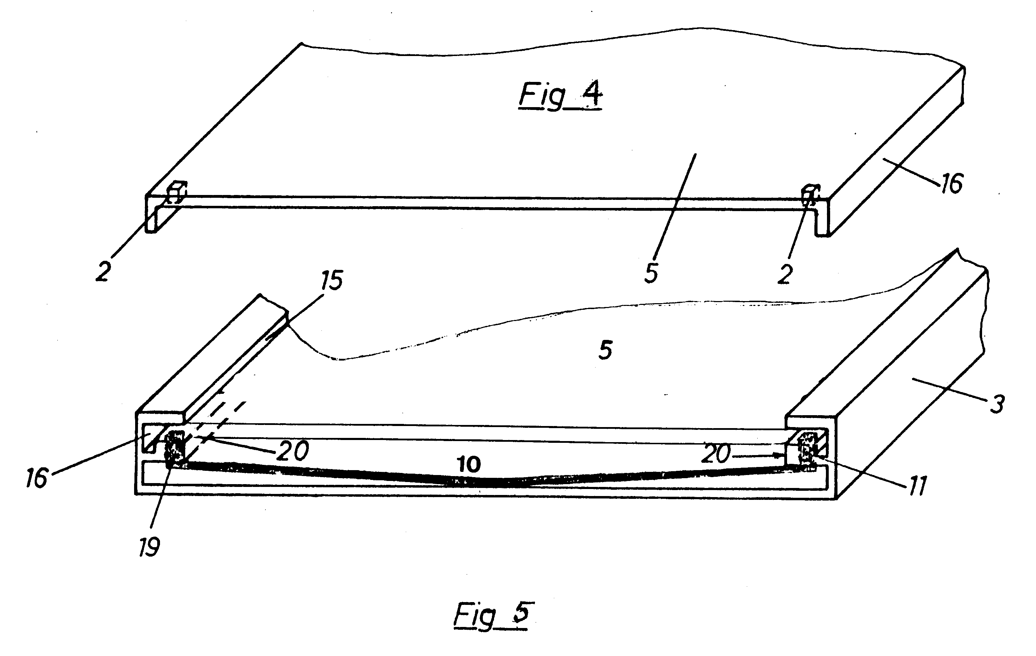

En se reportant à la figure 4 on trouve le couvercle à glissière (5) réalisé en plastique amagnétique moulé. Les bords latéraux ont une forme recourbée (16) pour glisser dans la rainure du couvercle. Des orifices (2) ont été usinés sur le dessous du couvercle et sont destinés à recevoir les ergots de blocage.

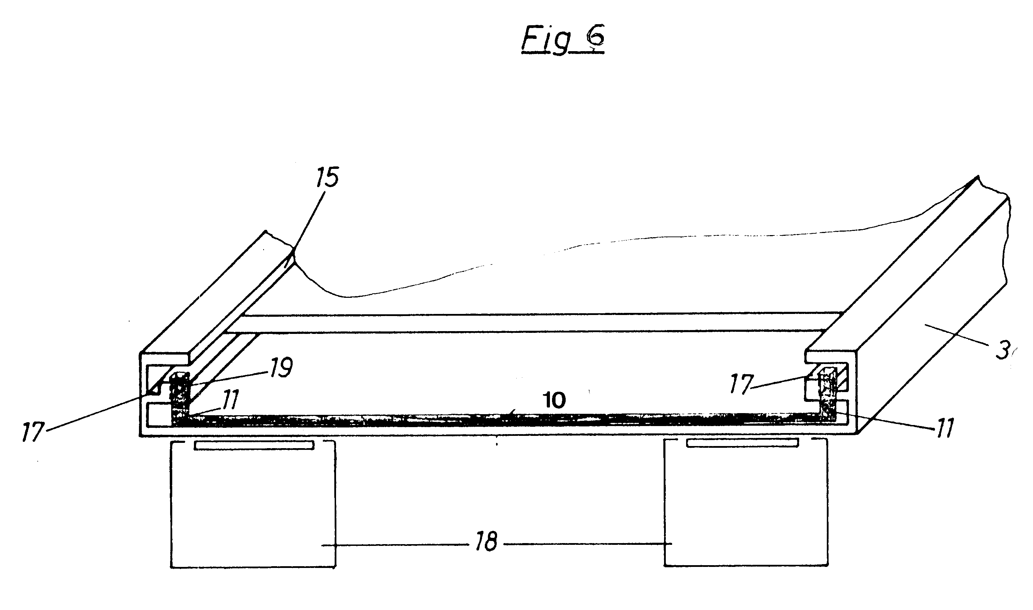

En se reportant à la figure 5 on trouve le couvercle (5) verrouillé sur le coffret (3). Les bords du couvercle (16) sont protégés par les rebords (15) du coffret. Les rebords (15) et les rails (20) du coffret constituent un logement où coulisse le couvercle (5) : ce logement est indexé (17) sur la figure 6. Les rails (20) sont percés à leur extrémité d'orifices (19).

Dans les conditions de verrouillage obtenues comme sur la figure 5, les orifices (19) des rails (20) et les orifices (2) du couvercle coulissant (5) sont face-à-face quand le couvercle est fermé, de façon à ce que les ergots (11) de la lame métallique (10) les pénètrent et bloquent le couvercle.

Cette lame métallique (10) de longueur égale à la largeur du coffret. Son profil est en forme cambrée et elle dispose à chacune de ses extrémités d'un ergot (11) découpé dans la lame métallique (10). Ces ergots sont pliés vers le haut face aux orifices (19,2) du boîtier (4) et du couvercle coulissant (5). Sa mise en place est obtenu au moyen du champ magnétique qui va plaquer la lame métallique (10) sur le fond du boîtier (4), maintenir les ergots portés par cette lame en dehors des orifices. On peut alors mettre les disques compacts à l'intérieur du boîtier (4), le fermer avec le couvercle coulissant (5), extraire les feuilles du livret descriptif à l'extérieur, pousser le couvercle coulissant jusqu'au fond des rainures et arrêter l'action du champ magnétique.

En se reportant à la figure 6 on trouve le couvercle (5) qui est déverrouillé du coffret.
Pour obtenir ce déverrouillage, on a placé deux électro-aimants (18) qui redressent la lame métallique (10) portant les ergots (11).Les ergots (11), en se rétractant, délivrent le couvercle (5) en quittant les orifices (2) du couvercle. Ce mouvement fait apparaître le logement (17) où coulisse le couvercle (5).

On peut utiliser une lame métallique dont les ergots (11) ont la hauteur correspondant à l'épaisseur du coffret.
Le dispositif électromagnétique (18) utilisé est placé près de la caisse du magasin à la disposition du loueur ou du vendeur. Ce dernier actionne le déverrouillage et retire l'objet ou le disque du coffret, puis le remet au client au moment de la transaction.

Un détecteur d'alarme complète le coffret qui ne peut être dérobé ou sorti du magasin sans provoquer une alarme.

## Revendications

1. Ensemble pochette-boîtier inviolable pour prêt de disques compacts, caractérisé en ce que cet ensemble comporte une pochette plastique souple à volets composés d'étuis (1) réunis par un dosseret (6), ces étuis contenant un ou plusieurs disques compacts, un livret d'identification (7) et une fiche de prêt; un boîtier (4) muni d'un couvercle coulissant verrouillable (5) qui laisse subsister, quand il est fermé, un espace suffisant (21) pour assurer l'émergence à l'extérieur du boîtier des étuis contenant le livret d'identification (7) et de retenir à l'intérieur du boîtier les étuis contenant les disques compacts et la fiche de prêt sans que les disques compacts ne puissent être extrait du boîtier verrouillé.

2. Ensemble pochette - boîtier inviolable pour prêt, selon la revendication 1, caractérisé en ce que l'identification du disque compact est obtenue au moyen du livret (7) solidaire de la pochette souple à volets composés d'étuis (1) renfermant des sachets anti-poussière contenant les disques compacts.

3. Ensemble pochette-boîtier inviolable pour prêt, selon la revendication 1, caractérisé en ce que la pochette souple comprenant les étuis (1) renfermant le livret (7) et les disques compacts sont réalisés au moyen d'une feuille de chlorure de polyvinyl transparent et souple que l'on soude afin de réunir les étuis de façon solidaire au niveau d'un dosseret souple (6) en plastique soudé.

4. Ensemble pochette-boîtier inviolable pour prêt, selon la revendication 1, caractérisé en ce que le couvercle coulissant (5) est garni à son extrémité d'orifices (2) qui au moment du verrouillage sont face à face avec des orifices (19) réalisés dans des glissières (17) du boîtier, le verrouillage du couvercle coulissant (5) sur le boîtier (4) est obtenu au moyen d'une lame métallique (10) placée à l'extrémité du boîtier, cette lame est arquée au repos, et porte à ses deux extrémités un ergot (11) qui pénètre simultanément dans les orifices (2) du couvercle (5) et les orifices (19) du boîter (4) verrouillant ainsi le couvercle sur le boîtier, le déverrouillage étant obtenu par l'abaissement de ces ergots (11) lorsque la lame (10) est redressée sous l'action d'un électro-aimant (18) fixe, extérieur à l'ensemble et commandé par le vendeur ; le couvercle (5) libéré des ergots peut coulisser dans des rails (20) du boîtier pour permettre d'atteindre l'intérieur du boîtier.

5. Ensemble pochette-boîtier inviolable pour prêt selon la revendication 1, caractérisé en ce que le boîtier est verrouillé au moyen d'un couvercle coulissant (5) se déplaçant dans une rainure (17) dont la partie supérieure est protégée par un rebord (15) rendant le couvercle inviolable.

## Claims

1. Theft-proof pocket and case package for the storing of compact disks on loan.
The specific features of this package include:
- a souple plastic pocket with several compartments which come as a series of sleeves(1) held together on a stationary support(6). These sleeves are ment to offer storage space for one (or more) compact disk(s),for an identification booklet(7) and for a lending care
- a case (4) with sliding lid and locking mecanism(5).This locking device is meant to leave sufficient space (when in locked-in position)(21) for some sleeves to stick out from the case :the sleeves with bookle for identification of content(7) will remain accessible while the sleeves for compact disk storage can't be accessed nor taken out of the locked case.

2. Theft- proof pocket and case package for the storing of compact disk on loan as described in 1,which is characterised by the following feature :compact disks can be identified thanks to a stationary flexible pocket providing several compartments (sleeves (1)) in which a booklet is stored(7) and dust-proof holders protect the compact disks.

3. Theft-proof pocket and case package for the storing of compact disk on loan as described in 1 , which is characterised by the following feature : the sleeves (1) providing storage space for the booklet(7 and compact disks are made of a translucent and souple film of polychlorure of vinyl .These sleeves are welded together and secured on a stationary support (6) made from welded plastic.

4. This theft-proof pocket and case pakage for lending purposes, as shown in figure 1,features a sliding lid(5) with holes which, when the system is in locked-in position,are facing holes (19) pierced in channels (17) of the case.
The locked-in position of the lid(5)can be secured with a steel blade(10)placed at one end of the case. this blade is arched in the resting position and features pins(11) at both ends .Pins simultanously enter holes(2) in lid(5) and holes(19)in case(4), thus locking the lid onto the case.
Unlocking can be achieved by lowering these pins(11) when the blade (10) is straightened under the effect of an electric magnet(18) set outside the package and operated by the assistant.
The lid(5),when released from pins can slide along the rails(20) and allow access inside the case.

5. This theft-proof pocket and case package for lending purposes, as shown in figure 1, features a case locked with a sliding lid feature (5) moving along a channel(17) the upper part of which is protected by an outer edge(15) making the lid totally unbreakable.

## Patentansprüche

1. Diebstahlsicheres Etui-Gehäuse-System für den Verleih von CD-Platten, dadurch gekennzeichnet, daß es ein mehrteiliges flexibles Kunststoffetui enthält, bestehend aus einzelnen Hüllen (1), die durch einen Steg (6) miteinander verbunden sind und eine oder mehrere CD-Platten, ein Begleitheft (7) und eine Verleihkarte enthalten; sowie ein Gehäuse (4) mit einem verriegelbaren Schiebedeckel (5), der, wenn er geschlossen ist, einen ausreichend großen Zwischenraum (21) läßt, so daß die das Begleitheft (7) enthaltenden Hüllen aus dem Gehäuse herausragen können, während die Hüllen mit den CD-Platten im Innern des Gehäuses zurückgehalten werden, ohne daß die CD-Platten aus dem verriegelten Gehäuse entnommen werden können.

2. Diebstahlsicheres Etui-Gehäuse-System für Verleihzwecke nach Anspruch 1, gekennzeichnet dadurch, daß die Identifizierung der CD-Platte durch das Begleitheft (7) erfolgt, welches fest verbunden ist mit dem mehrteiligen flexiblen Etui, bestehend aus Hüllen (1), welche Staubschutzbeutel mit den CD-Platten enthalten.

3. Diebstahlsicheres Etui-Gehäuse-System für Verleihzwecke nach Anspruch 1, gekennzeichnet dadurch, daß die in dem flexiblen Etui enthaltenen Hüllen (1), die das Begleitheft (7) und die CD-Platten beinhalten, aus flexibler durchsichtiger Polyvinylchlorid-Folie hergestellt und so verschweißt sind, daß die Hüllen an einem biegsamen Steg (6) aus verschweißtem Kunststoff fest miteinander verbunden sind.

4. Diebstahlsicheres Etui-Gehäuse-System für Verleihzwecke nach Anspruch 1, gekennzeichnet dadurch, daß der Schiebedeckel (5) an seinem Ende mit Löchern (2) versehen ist, die sich beim Verriegeln genau gegenüber entsprechenden Löchern (19) in den Schienen (17) des Gehäuses befinden, wobei das Verriegeln des Schiebedeckels (5) auf dem Gehäuse (4) mithilfe eines am Ende des Gehäuses befindlichen Metallstreifens (10) erfolgt, welcher im Ruhezustand gewölbt und an beiden Enden mit je einem Haken (11) versehen ist, der gleichzeitig in die Löcher (2) des Deckels und in die Löcher (19) des Gehäuses (4) eindringt und somit den Deckel auf dem Gehäuse verriegelt; das Entriegeln erfolgt dadurch, daß die Haken (11) nach unten gezogen werden, wenn der Metallstreifen (10) unter der Wirkung eines von dem Etui-Gehäuse-System getrennten und vom Verkäufer bedienten, ortsfesten Elektromagneten geradegebogen wird; der von den Haken freigegebene Deckel (5) läßt sich auf den Schienen verschieben, um den Innenraum des Gehäuses zugänglich zu machen.

5. Diebstahlsicheres Etui-Gehäuse-System für Verleihzwecke nach Anspruch 1, gekennzeichnet dadurch, daß das Gehäuse durch einen Schiebedeckel (5) verschlossen wird, welcher in einer Nut (17) läuft, deren oberer Teil geschützt ist durch einen nach innen umgebogenen Rand (15), welcher den Deckel vor unbefugtem Öffnen sichert.
